# EUROPEAN PATENT SPECIFICATION

(11) **EP 2 283 735 B1**
(45) Date of publication and mention of the grant of the patent: **05.10.2016**
(21) Application number: 10169552.6
(22) Date of filing: 14.07.2010
(51) Int. Cl.: B26D 3/26, B26D 1/00, B26D 3/24

(54) **Fleshy whole fruit pre-cut for division into pieces at the point of consumption and method and device for preparation thereof**
Vorgeschnittene noch als Ganzes vorliegende fleischige Frucht sowie Verfahren und Einrichtung zu deren Zubereitung
Fruit entier et prédécoupé et procédé et dispositif pour sa préparation

(30) Priority: 17.07.2009 NL 2003232
(43) Date of publication of application: 16.02.2011
(73) Proprietor: Van Eeuwijk, Johannes Josef Maria, 5825 BW Overloon (NL)
(72) Inventor: Van Eeuwijk, Johannes Josef Maria, 5825 BW Overloon (NL)
(74) Representative: Dokter, Hendrik Daniel

(56) References cited:
- WO-A1-03/051162
- DE-A1-102009 013 242
- JP-A- 2003 001 588
- US-A1- 2008 168 660
- US-A1- 2009 266 246

## Description

The invention relates to a fleshy, substantially round fruit, for instance a tomato, preprocessed for division into pieces suitable for consumption.

In restaurants and snack bars it is for instance known to divide fleshy fruits such as tomatoes in advance into cubes, slices or segments for consumption.

Dividing fruits in advance has the evident advantage that the preparation of a dish in which these fruits are used takes place more quickly than if the fruit still has to be cleaned and divided into pieces immediately prior to preparation. It is therefore usual, for the purpose of preparing dishes in a professional environment, for fruits to be supplied cleaned and cut into cubes, slices or segments.

It is an inherent drawback of cut fleshy fruits that the cubes, slices or segments keep less well than fruits which have not been cut, and that they are liable to lose their flavour. In the case of cut juicy fruits such as tomatoes there is the added drawback that at the bottom of a container in which the cut fruits are held there accumulate juice and seeds which are less desirable for some applications.

JP 2003 001588 A discloses a fruit cutter including a base which is mounted with a cut-off part that has high blades and low blades placed on a worktable. An apple placed on the blades is cut and separated but one end of it is still connected.

US 2008/168660 A1 discloses a fruit cutter which includes a fixed seat and a cutting device movable relative to the fixed seat.

US 2009/0266246 A1 discloses a puzzle apple slicer which cuts an apple or similar fruit or vegetable portions thereof into wedges by radial blades each having a protrusion forming interfit channels and ridges in adjacent sides of the wedges to interlock the wedges together.

WO 03/051162A1 discloses a method of cutting tomatoes or other fruit and vegetable products into segments as a preliminary step to a dehydration process, and an apparatus for carrying out said method.

None of the fruit cutters according to the prior art documents mentioned above is suited for preprocessing fleshy, for instance a tomato, for division into pieces suitable for consumption.

It is an object of the invention to provide a fleshy fruit which is preprocessed for division into pieces suitable for consumption without the above stated drawbacks occurring.

The invention provides for this purpose a fruit of the type described in the preamble, characterized by a number of incisions extending in a cross-section radially from an imaginary centre circle to the outer side of the fruit.

Because the incisions extend radially from an imaginary centre circle, the segments of sector-shaped cross-section separated by the incisions remain connected to each other by means of a cylindrical part of a fruit extending in axial direction from the centre circle. The thus connected segments can be easily separated from each other immediately prior to use thereof, and until use form a more or less closed whole from which juice and seeds do not escape, or do so only with difficulty. A fruit preprocessed according to the invention has a longer shelf-life and a better taste than a fruit cut in known manner into cubes, slices or segments.

The centre circle has for instance a diameter in the range of 2 to 6 mm.

The number of incisions is preferably distributed regularly over the cross-section and amounts for instance to between four and twelve.

The invention also relates to a method for preparing an above described preprocessed fruit, comprising the steps of (i) providing the fruit, (ii) providing a hollow first cylinder provided with blades which extend radially inward from the inner jacket of this cylinder to the outer jacket of an imaginary coaxial second cylinder, and the cutting edge of which is oriented in one axial direction, wherein the first cylinder has an internal cross-section which is at least equal to the largest external cross-section of the fruit, and the second cylinder bounds a free cylindrical space, the diameter of which is at least an order of magnitude smaller than the inner diameter of the first cylinder, (iii) providing a stamp directed toward the cutting edge of the blades and co-acting with the blades, (iv) placing the fruit between the blades and the stamp in a manner such that in cross-section it is oriented substantially perpendicularly of the axial direction of the first cylinder, and (v) arranging the incisions by moving the blades and the stamp toward each other in axial direction.

The invention further relates to a device for performing the above described method, comprising a hollow first cylinder provided with blades which extend radially inward from the inner jacket of this cylinder to the outer jacket of an imaginary coaxial second cylinder, and the cutting edge of which is oriented in one axial direction, wherein the first cylinder has an internal cross-section which is at least equal to the largest external cross-section of the fruit, and the second cylinder bounds a free cylindrical space, the outer diameter of which is at least an order of magnitude smaller than the inner diameter of the first cylinder, and a stamp directed toward the cutting edge of the blades and co-acting with the blades for receiving a fruit between the blades and the stamp and moving the blades and the stamp toward each other in axial direction.

The outer diameter has for instance a value in the range of 2 to 6 mm.

The invention will be elucidated hereinbelow on the basis of an exemplary embodiment, with reference to the drawings.

In the drawings
Fig. 1 shows a cross-section of a tomato according to the invention provided with incisions,
Fig. 2 is a perspective view of the tomato shown in fig. 1, and
Fig. 3 is a perspective top view of a hollow cylinder provided with blades for an embodiment of a cutting device according to the invention.

Corresponding components are designated in the figures with the same reference numerals.

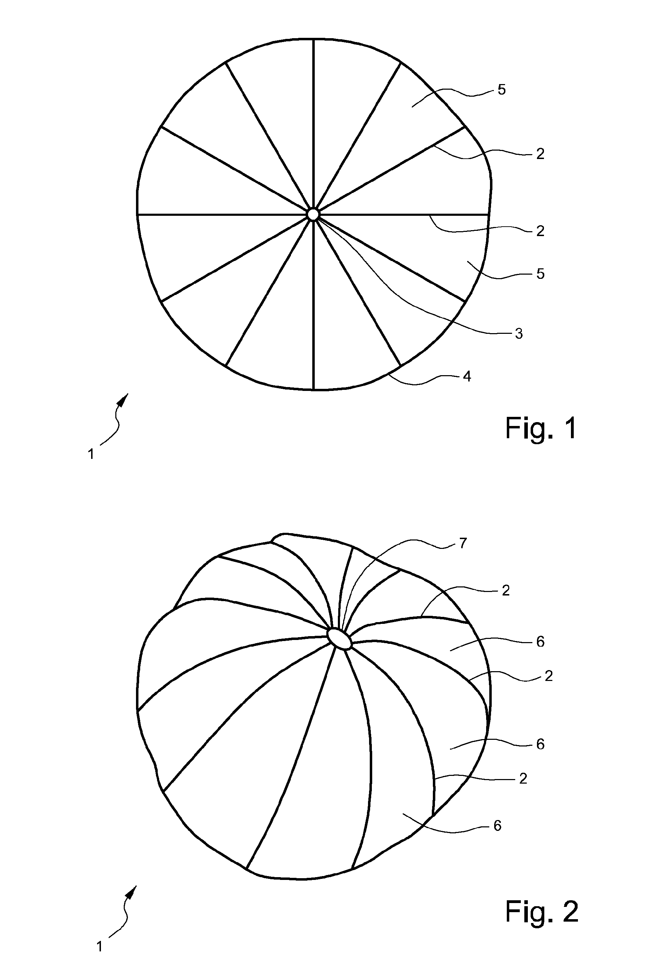

Fig. 1 shows a cross-section of a tomato 1 with twelve incisions 2 which extend radially to outer side 4 from the centre of tomato 1, represented by an imaginary centre circle 3. Incisions 2 bound sector-like portions 5 which are mutually connected at their tip by a central part of tomato 1 designated by centre circle 3.

Fig. 2 is a perspective view of tomato 1 of fig. 1, which shows how the sector-like segments 6 mutually separated by incisions 2 are held together by the cylindrical central part 7 of tomato 1.

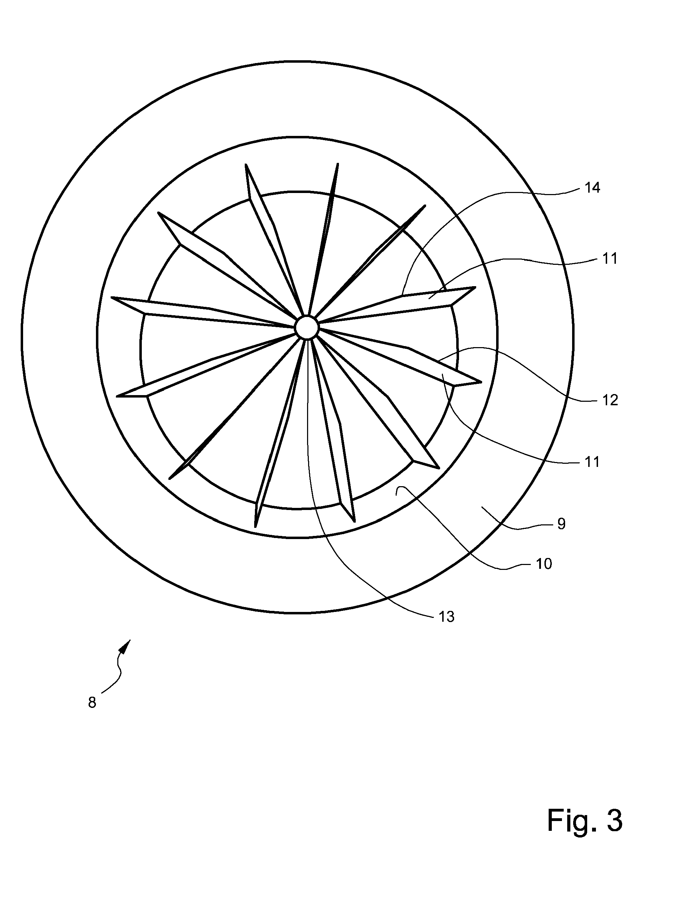

Fig. 3 is a top view of a part of a cutting machine with a hollow cylinder 9 provided with twelve blades 11 which extend radially inward from the inner jacket and the cutting edges 12 of which are oriented upward. Blades 11 are suspended separately of each other and are bounded at their end remote from inner wall 10 by an imaginary coaxial cylinder 13, which has a diameter which is at least an order of magnitude smaller than the inner diameter of hollow cylinder 9. The diameter of the imaginary coaxial cylinder 13 amounts for instance to 2 to 6 mm at an inner diameter of hollow cylinder 9 of for instance 10 cm. In order to optimize the cutting effect the blades 11 have a bend 14 on their cutting edges 12.

## Claims

1. Fleshy, substantially round fruit (1), for instance a tomato, preprocessed for division into pieces suitable for consumption, **characterized by** a number of incisions (2) extending in a cross-section radially from an imaginary centre circle (3) to the outer side (4) of the fruit (1), such that segments (6) of sector-shaped cross-section separated by the incisions (2) remain connected to each other by means of a cylindrical part (7) of the fruit extending in axial direction from the centre circle (3).

2. Preprocessed fruit (1) as claimed in claim 1, **characterized in that** the centre circle (3) has a diameter in the range of 2 to 6 mm.

3. Preprocessed fruit (1) as claimed in claims 1-2, **characterized in that** the number of incisions (2) is distributed regularly over the cross-section.

4. Preprocessed fruit (1) as claimed in any of the claims 1-3, **characterized in that** the number of incisions (2) amounts to between four and twelve.

5. Method for preparing a preprocessed fruit (1) as claimed in any of the claims 1-4, comprising the steps of
(i) providing the fruit (1),
(ii) providing a hollow first cylinder (9) provided with blades (11) which extend radially inward from the inner jacket (10) of this cylinder (9) to the outer jacket of an imaginary coaxial second cylinder (13), and the cutting edge (12) of which is oriented in one axial direction, wherein the first cylinder (9) has an internal cross-section which is at least equal to the largest external cross-section of the fruit (1), and the second cylinder bounds a free cylindrical space (13), the outer diameter of which is at least an order of magnitude smaller than the inner diameter of the first cylinder (9),
(iii) providing a stamp directed toward the cutting edge (12) of the blades and co-acting with the blades (11),
(iv) placing the fruit (1) between the blades (11) and the stamp in a manner such that in a cross-section it is oriented substantially perpendicularly of the axial direction of the first cylinder (9), and
(v) arranging the incisions (2) by moving the blades (11) and the stamp toward each other in axial direction.

6. Method as claimed in claim 5, wherein the outer diameter has a value in the range of 2 to 6 mm.

7. Device (8) for performing a method as claimed in claims 5-6, comprising
a hollow first cylinder (9) provided with blades (11) which extend radially inward from the inner jacket (10) of this cylinder (9) to the outer jacket of an imaginary coaxial second cylinder (13), and the cutting edge (12) of which is oriented in one axial direction, wherein the first cylinder (9) has an internal cross-section which is at least equal to the largest external cross-section of the fruit (1), and the second cylinder (13) bounds a free cylindrical space, the outer diameter of which is at least an order of magnitude smaller than the inner diameter of the first cylinder (9), and
a stamp directed toward the cutting edge (12) of the blades (11) and co-acting with the blades (11) for receiving a fruit (1) between the blades (11) and the stamp, and moving the blades (11) and the stamp toward each other in axial direction.

## Patentansprüche

1. Fleischige, im Wesentlichen runde Frucht (1), zum Beispiel eine Tomate, vorbearbeitet zum Zerteilen in für den Verzehr geeignete Stücke, **dadurch gekennzeichnet, dass** eine Mehrzahl sich in einem Querschnitt von einem imaginärem Mittelkreis (3) radial zu der Außenseite (4) der Frucht (1) erstreckende Einschnitte (2), in solcher Weise, dass durch die Einschnitte (2) getrennte im Querschnitt sektorförmige Segmente (6) zusammengehalten werden durch einen zylindrischen Teil (7) der Frucht, der sich in axiale Richtung des Mittelkreises (3) erstreckt.

2. Vorbearbeitete Frucht (1) gemäß Anspruch 1, **dadurch gekennzeichnet, dass** der Mittelkreis (3) einen Durchmesser in dem Bereich von 2 bis 6 mm aufweist.

3. Vorbearbeitete Frucht (1) gemäß einem der Ansprüche 1-2, **dadurch gekennzeichnet, dass** die Zahl der Einschnitte (2) regelmäßig über den Querschnitt verteilt ist.

4. Vorbearbeitete Frucht (1) gemäß einem der Ansprüche 1-3, **dadurch gekennzeichnet, dass** die Zahl der Einschnitte (2) zwischen vier und zwölf beträgt.

5. Verfahren zur Vorbereitung einer vorbearbeiteten Frucht (1) gemäß einem der Ansprüche 1-4, umfassend die Schritte
(i) des Bereitstellens der Frucht (1),
(ii) des Bereitstellens eines hohlen ersten Zylinders (9) der mit sich radial von dem Innenmantel (10) dieses Zylinders (9) einwärts bis zu dem Außenmantel eines imaginären koaxialen zweiten Zylinders (13) erstreckenden Messer (11) ausgestattet ist, wovon die Schneide (12) in einer axialen Richtung ausgerichtet ist, wobei der erste Zylinder (9) einen inneren Durchschnitt aufweist, der zumindest gleich dem äußeren größten Durchschnitt der Frucht (1) ist und der zweite Zylinder einen freien zylindrischen Raum (13) begrenzt, wovon der Außendurchmesser zumindest eine Größenordnung kleiner als der Innendurchmesser des ersten Zylinders (9) ist,
(iii) des Bereitstellens eines zu der Schneide (12) der Messer gerichteten mit den Messern (11) zusammenarbeitenden Stempels,
(iv) des zwischen den Messern (11) und dem Stempel Bringens der Frucht (1), in solcher Weise, dass diese in einem Querschnitt im Wesentlichen senkrecht auf der axialen Richtung des ersten Zylinders (9) gerichtet ist, und
(v) des Anbringens der Einschnitte (2) durch das in axialer Richtung zu einander Bringen der Messer (9) und des Stempels.

6. Verfahren gemäß Anspruch 5, wobei der Außendurchmesser einen Wert im Bereich von 2 bis 6 mm aufweist.

7. Einrichtung (8) zur Durchführung eines Verfahrens gemäß einem der Ansprüche 5-6, umfassend
einen hohlen ersten Zylinder (9), der mit sich radial von dem Innenmantel (10) dieses Zylinders (9) einwärts bis zu dem Außenmantel eines imaginären koaxialen zweiten Zylinders (13) erstreckenden Messern (11) ausgestattet ist, wovon die Schneide (12) in einer axialen Richtung ausgerichtet ist, wobei der erste Zylinder (9) einen inneren Durchschnitt aufweist, der zumindest gleich dem äußeren größten Durchschnitt der Frucht (1) ist und der zweite Zylinder (13) einen freien zylindrischen Raum begrenzt, wovon der Außendurchmesser zumindest eine Größenordnung kleiner als der Innendurchmesser des ersten Zylinders (9) ist, und
eines zu der Schneide (12) der Messer (11) ausgerichteten mit den Messern (11) zusammenarbeitenden Stempels für das zwischen den Messern (11) und dem Stempel Aufnehmen einer Frucht (1) und das in axialer Richtung zu einander Bringen der Messer (11) und des Stempels.

## Revendications

1. Fruit charnu sensiblement rond (1), par exemple une tomate, prétraité pour être divisé en quartiers appropriés pour la consommation, **caractérisé par** un nombre d'incisions (2) s'étendant dans une section transversale radialement à partir d'un cercle central imaginaire (3) jusqu'au côté extérieur (4) du fruit (1), de telle sorte que des segments (6) de section transversale en forme de secteur séparés par les incisions (2) restent connectés les uns aux autres au moyen d'une partie cylindrique (7) du fruit s'étendant dans une direction axiale à partir du cercle central (3).

2. Fruit prétraité (1) selon la revendication 1, **caractérisé en ce que** le cercle central (3) présente un diamètre compris dans la gamme de 2 mm à 6 mm.

3. Fruit prétraité (1) selon les revendications 1 et 2, **caractérisé en ce que** le nombre d'incisions (2) est réparti de façon régulière sur la section transversale.

4. Fruit prétraité (1) selon l'une quelconque des revendications 1 à 3, **caractérisé en ce que** le nombre d'incisions (2) est compris entre quatre et douze.

5. Procédé de préparation d'un fruit prétraité (1) selon l'une quelconque des revendications 1 à 4, comprenant les étapes suivantes:
(i) fournir le fruit (1);
(ii) fournir un premier cylindre creux (9) pourvu de lames (11) qui s'étendent radialement vers l'intérieur à partir de l'enveloppe intérieure (10) de ce cylindre (9) jusqu'à l'enveloppe extérieure d'un second cylindre coaxial imaginaire (13), et dont le bord de coupe (12) est orienté dans une direction axiale, dans lequel le premier cylindre (9) présente une section transversale interne qui est au moins égale à la plus grande section transversale externe du fruit (1), et le second cylindre (13) délimite un espace cylindrique libre dont le diamètre extérieur est au moins d'un ordre de grandeur inférieur au diamètre intérieur du premier cylindre (9),
(iii) fournir un tampon orienté en direction du bord de coupe (12) des lames et co-agissant avec les lames (11),
(iv) placer le fruit (1) entre les lames (11) et le tampon de telle sorte que dans une section transversale il soit orienté sensiblement perpendiculairement à la direction axiale du premier cylindre (9), et
(v) pratiquer les incisions (2) en déplaçant les lames (11) et le tampon les unes vers l'autre dans une direction axiale.

6. Procédé selon la revendication 5, dans lequel le diamètre extérieur présente une valeur comprise dans la gamme de 2 mm à 6 mm.

7. Dispositif (8) pour exécuter un procédé selon l'une quelconque des revendications 5 à 6, comprenant un premier cylindre creux (9) pourvu de lames (11) qui s'étendent radialement vers l'intérieur à partir de l'enveloppe intérieure (10) de ce cylindre (9) jusqu'à l'enveloppe extérieure d'un second cylindre coaxial imaginaire (13), et dont le bord de coupe (12) est orienté dans une première direction axiale, dans lequel le premier cylindre (9) présente une section transversale interne qui est au moins égale à la plus grande section transversale externe du fruit (1), et le second cylindre (13) délimite un espace cylindrique libre dont le diamètre extérieur est au moins d'un ordre de grandeur inférieur au diamètre intérieur du premier cylindre (9), et
un tampon orienté en direction du bord de coupe (12) des lames (11) et co-agissant avec les lames (11) pour recevoir un fuit (1) entre les lames (11) et le tampon, et déplacer les lames (11) et le tampon les unes vers l'autre dans une direction axiale.
